(19) Europäisches Patentamt
European Patent Office
Office européen des brevets

(11) **EP 2 700 684 A1**

(12) **EUROPEAN PATENT APPLICATION**
published in accordance with Art. 153(4) EPC

(43) Date of publication:
**26.02.2014 Bulletin 2014/09**

(51) Int Cl.:
*C09J 7/02* (2006.01)    *C09J 201/00* (2006.01)
*C09J 175/08* (2006.01)    *C09J 183/00* (2006.01)

(21) Application number: **12773501.7**

(22) Date of filing: **06.04.2012**

(86) International application number:
**PCT/JP2012/059531**

(87) International publication number:
**WO 2012/144351 (26.10.2012 Gazette 2012/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.04.2011  JP 2011095696**

(71) Applicant: **Nitto Denko Corporation
Ibaraki-shi, Osaka  567-8680 (JP)**

(72) Inventor: **JO, Souya
Ibaraki-shi
Osaka 567-8680 (JP)**

(74) Representative: **Grünecker, Kinkeldey,
Stockmair & Schwanhäusser
Leopoldstrasse 4
80802 München (DE)**

(54) **SURFACE-PROTECTING FILM**

(57)    Provided is a novel surface protective film that can express sufficiently high wettability even when no plasticizer is used, can prevent the formation of a stop mark, and is excellent in reworkability. The surface protective film is a surface protective film, including: a base material layer; and a pressure-sensitive adhesive layer, in which: a gel fraction of the pressure-sensitive adhesive layer is 70% or more; and a first wetting rate with respect to an acrylic plate in a surface of the pressure-sensitive adhesive layer, which is brought into contact with an adherend, is 5.0 cm$^2$/sec or more.

FIG. 1

**Description**

Technical Field

The present invention relates to a surface protective film. The surface protective film of the present invention has a base material layer and a pressure-sensitive adhesive layer, and is used in, for example, an application where a surface of a display member, image recognition member, or electronic equipment is protected by attaching the film to the surface.

Background Art

A surface protective film may be attached to the surface of a display member such as an LCD or an organic EL, or a touch panel using the LCD or organic EL, of an image recognition member such as the lens portion of a camera, or of an electronic equipment for preventing the flaw, dirt, and the like of the surface.

Such surface protective film may be manually attached in a production step such as assembly or at the time of the shipment of a product. When the surface protective film is manually attached, air bubbles may be involved between an adherend and the surface protective film.

A technology involving adding a plasticizer to the pressure-sensitive adhesive layer of the surface protective film to improve its wettability has been reported as a technology for preventing the air bubbles from being involved between the adherend and the surface protective film when the surface protective film is manually attached to the adherend (Patent Literature 1).

However, when the plasticizer is added to the pressure-sensitive adhesive, a cohesive strength of the pressure-sensitive adhesive layer becomes lower, and there occurs such a failure that a stop mark is formed. The stop mark refers to deformation of the pressure-sensitive adhesive layer caused by concentration of stress at the peeling interface due to a leverage effect caused by bending of the pressure-sensitive adhesive layer owing to a change in peeling rate or stop of peeling before the pressure-sensitive adhesive layer is completely separated from the adherend in peeling of the pressure-sensitive layer from the adherend.

Further, even if the wettability alone is improved by decreasing a gel fraction, the cohesive strength of the pressure-sensitive adhesive layer becomes lower, resulting in such a failure that the stop mark is liable to be formed.

For example, a pressure-sensitive adhesive layer using an olefin-based elastomer having an uncross-linked structure and having satisfactory wettability has satisfactory wettability. However, the stop mark is extremely liable to be formed in the layer.

In addition, when the adherend and the surface protective film are manually attached, reworkability as well as wettability is required in many cases because the same surface protective film is repeatedly attached and peeled manually in many cases. Accordingly, even if the film has satisfactory wettability, when the peeling is heavy or the stop mark is formed, the protective film peeled off cannot be reused as the surface protective film, resulting in losing its reworkability.

Citation List

Patent Literature

[PTL 1] JP 2010-209324 A

Summary of Invention

Technical Problem

The present invention has been made to solve the conventional problems, and an object of the present invention is to provide a novel surface protective film that can express sufficiently high wettability even when no plasticizer is added, can prevent the formation of a stop mark, and is excellent in reworkability.

Solution to Problem

A surface protective film of the present invention is a surface protective film, including: a base material layer; and a pressure-sensitive adhesive layer, in which: a gel fraction of the pressure-sensitive adhesive layer is 70% or more; and a first wetting rate with respect to an acrylic plate in a surface of the pressure-sensitive adhesive layer, which is brought into contact with an adherend, is 5.0 cm$^2$/sec or more.

In a preferred embodiment, an adhesion with respect to the acrylic plate in the surface of the pressure-sensitive adhesive layer, which is brought into contact with the adherend, is 0.02 to 0.5 N/25 mm.

In a preferred embodiment, the surface protective film of the present invention is used for a surface of a display member, an image recognition member, or an electronic equipment.

The present invention also provides a display member. The display member of the present invention is covered with the surface protective film of the present invention.

The present invention also provides an image recognition member. The image recognition member of the present invention is covered with the surface protective film of the present invention.

The present invention also provides an electronic equipment. The electronic equipment of the present invention is covered with the surface protective film of the present invention.

Advantageous Effects of Invention

According to the present invention, there can be provided a novel surface protective film that can express sufficiently high wettability, can prevent the formationof a stopmark, and is excellent in reworkability.

Brief Description of Drawings

FIG. 1 is a schematic sectional view of a surface protective film according to a preferred embodiment of the present invention.

FIG. 2 is a schematic sectional view illustrating a state before the attachment of an acrylic plate and a test piece in the measurement of a wetting rate.

Description of Embodiments

«A. Surface protective film»

A surface protective film of the present invention includes a base material layer and a pressure-sensitive adhesive layer.

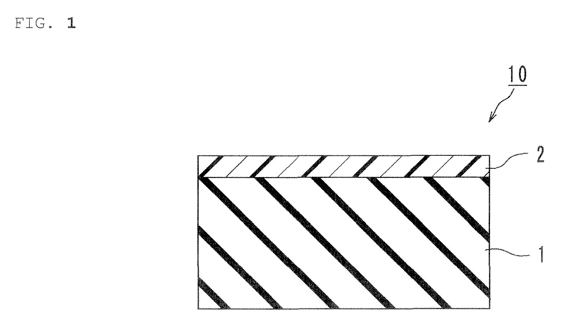

FIG. 1 is a schematic sectional view of a surface protective film according to a preferred embodiment of the present invention. A surface protective film 10 includes a base material layer 1 and a pressure-sensitive adhesive layer 2. The surface protective film of the present invention may further have any appropriate other layer as required (not shown).

The surface of the base material layer 1 on which the pressure-sensitive adhesive layer 2 is not provided can be subjected to a release treatment by adding, for example, a fatty acid amide, a polyethyleneimine, or a long-chain alkyl-based additive to the base material layer, or can be provided with a coat layer formed of any appropriate releasing agent such as a silicone-, long-chain alkyl-, or fluorine-based releasing agent for the purpose of, for example, forming a roll body that can be easily rewound.

A release liner having releasability may be attached to the surface protective film of the present invention.

The thickness of the surface protective film of the present invention can be set to any appropriate thickness depending on applications. The thickness is preferably 10 to 300 $\mu$m, more preferably 15 to 250 $\mu$m, still more preferably 20 to 200 $\mu$m, particularly preferably 25 to 150 $\mu$m from the viewpoint of sufficiently expressing the effect of the present invention.

In the surface protective layer of the present invention, the pressure-sensitive adhesive layer has a gel fraction of 70% or more, preferably 80% or more, more preferably 90% or more, still more preferably 95% or more. When the gel fraction of the pressure-sensitive adhesive layer falls within the range, the surface protective film of the present invention can express sufficiently high wettability even without the use of any plasticizer, can prevent the formation of a stop mark, and is excellent in reworkability. It should be noted that the measurement of the gel fraction is described later.

In the surface protective film of the present invention, a first wetting rate with respect to an acrylic plate in the surface of the pressure-sensitive adhesive layer, which is brought into contact with an adherend, is preferably 5.0 cm$^2$/sec or more, more preferably 10 cm$^2$/sec or more, still more preferably 15 cm$^2$/sec or more, particularly preferably 20 cm$^2$/sec or more, most preferably 30 cm$^2$/sec or more. Although an upper limit for the first wetting rate is not particularly limited, the first wetting rate is preferably 1, 000 cm$^2$/ sec or less, more preferably 100 cm$^2$/sec or less in actuality. As long as the first wetting rate with respect to the acrylic plate in the surface of the pressure-sensitive adhesive layer, which is brought into contact with the adherend, falls within the range, the surface protective film of the present invention can express sufficiently high wettability even without the use of anyplasticizer. It should be noted that the measurement of the first wetting rate is described later.

In the surface protective film of the present invention, a third wetting rate with respect to an acrylic plate in the surface of the pressure-sensitive adhesive layer, which is brought into contact with an adherend, is preferably 5.0 cm$^2$/sec or more, more preferably 10 cm$^2$/sec or more, still more preferably 15 cm$^2$/sec or more, particularly preferably 20 cm$^2$/sec or more, most preferably 30 cm$^2$/sec or more. Although an upper limit for the third wetting rate is not particularly limited, the third wetting rate is preferably 1, 000 cm$^2$/sec or less, more preferably 100 cm$^2$/sec or less in actuality. As long as the third wetting rate with respect to the acrylic plate in the surface of the pressure-sensitive adhesive layer, which is brought into contact with the adherend, falls within the range, the surface protective film of the present invention can further express sufficiently high wettability even without the use of any plasticizer and is excellent in reworkability. It should be noted that the measurement of the third wetting rate is described later.

In the surface protective film of the present invention, an adhesion with respect to an acrylic plate in the surface of the pressure-sensitive adhesive layer, which is brought into contact with an adherend, is preferably 0.02 to 0.5 N/25 mm, more preferably 0.02 to 0.45 N/25 mm, still more preferably 0.02 to 0.4 N/25 mm. As long as the adhesion with respect to the acrylic plate in the surface of the pressure-sensitive adhesive layer, which is brought into contact with the adherend, falls within the range, the surface protective film of the present invention can further prevent the formation of a stop mark and is excellent in reworkability. It should be noted that the measurement of the adhesion is described later.

In the surface protective film of the present invention, a water contact angle in the surface of the pressure-sensitive adhesive layer, which is brought into contact with the adherend, is preferably 90° or more. Although an upper limit for the water contact angle is not particularly limited, the water contact angle is preferably 120° or less in actuality. As long as the water contact angle in the surface of the pressure-sensitive adhesive layer, which is brought into contact with the adherend, falls within the range, the surface protective film of the present invention can simultaneously realize a low adhesion and wettability.

<A-1. Base material layer>

Any appropriate thickness can be adopted as the thickness of the base material layer depending on applications. The thickness of the base material layer is preferably 5 to 300 $\mu$m, more preferably 10 to 250 $\mu$m, still more preferably 15 to 200 $\mu$m, particularly preferably 20 to 150 $\mu$m.

The base material layer may be a single layer, or may be a laminate of two or more layers. The base material layer may be stretched.

Any appropriate material can be adopted as a material for the base material layer depending on applications. Examples of the material include a plastic, paper, a metal film, and a nonwoven fabric. Of those, a plastic is preferred. The materials may be used alone or in combination to construct the base material layer. For example, the layer may be constructed of two or more kinds of plastics.

Examples of the plastic include a polyester-based resin, a polyamide-based resin, and a polyolefin-based resin. Examples of the polyester-based resin include polyethylene terephthalate, polybutylene terephthalate, and polyethylene naphthalate. Examples of the polyolefin-based resin include a homopolymer of an olefin monomer and a copolymer of olefin monomers. Specific examples of the polyolefin-based resin include: homopolypropylene; propylene-based copolymers such as block, random, and graft copolymers each including an ethylene component as a copolymer component; reactor TPO; ethylene-based polymers such as low density, high density, linear low density, and ultra low density polymers; and ethylene-based copolymers such as an ethylene-propylene copolymer, an ethylene-vinyl acetate copolymer, an ethylene-methyl acrylate copolymer, an ethylene-ethyl acrylate copolymer, an ethylene-butyl acrylate copolymer, an ethylene-methacrylic acid copolymer, and an ethylene-methyl methacrylate copolymer.

The base material layer may contain any appropriate additive as required. Examples of the additive that can be contained in the base material layer include an antioxidant, a UV absorbing agent, a light stabilizer, an antistatic agent, a filler, and a pigment. The kind, number, and amount of the additive that can be contained in the base material layer can be appropriately set depending on purposes. In particular, when the material for the base material layer is a plastic, it is preferred to contain some of the above-mentioned additives for the purpose of, for example, preventing deterioration. From the viewpoint of, for example, the improvement of weather resistance, particularly preferred examples of the additive include an antioxidant, a UV absorbing agent, a light stabilizer, and a filler.

Any appropriate antioxidant can be adopted as the antioxidant. Examples of such antioxidant include a phenol-based antioxidant, a phosphorus-based processing heat stabilizer, a lactone-based processing heat stabilizer, a sulfur-based heat stabilizer, andaphenol-phosphorus-basedantioxidant. The content of the antioxidant is preferably 1 part by weight or less, more preferably 0.5 part by weight or less, still more preferably 0.01 to 0.2 part by weight with respect to 100 parts by weight of the base resin of the base material layer (when the base material layer is a blend, the blend is the base resin).

Any appropriate UV absorbing agent can be adopted as the UV absorbing agent. Examples of such UV absorbing agent include a benzotriazole-based UV absorbing agent, a triazine-based UV absorbing agent, and a benzophenone-based UV absorbing agent. The content of the UV absorbing agent is preferably 2 parts by weight or less, more preferably 1 part by weight or less, still more preferably 0.01 to 0.5 part by weight with respect to 100 parts by weight of the base resin that forms the base material layer (when the base material layer is a blend, the blend is the base resin).

Any appropriate light stabilizer can be adopted as the light stabilizer. Examples of such light stabilizer include a hindered amine-based light stabilizer and a benzoate-based light stabilizer. The content of the light stabilizer is preferably 2 parts by weight or less, more preferably 1 part by weight or less, still more preferably 0.01 to 0.5 part by weight with respect to 100 parts by weight of the base resin that forms the base material layer (when the base material layer is a blend, the blend is the base resin).

Any appropriate filler can be adopted as the filler. Examples of such filler include an inorganic filler. Specific examples of the inorganic filler include carbon black, titanium oxide, and zinc oxide. The content of the filler is preferably 20 parts by weight or less, more preferably 10 parts by weight or less, still more preferably 0.01 to 10 parts by weight with respect to 100 parts by weight of the base resin that forms the base material layer (when the base material layer is a blend, the blend is the base resin).

Further, a surfactant, an inorganic salt, a polyhydric alcohol, a metal compound, an inorganic antistatic agent such as carbon, and low molecular-weight and high molecular-weight antistatic agents each intended to impart antistatic property are also preferably given as examples of the additive. Of those, a high-molecular weight antistatic agent or carbon is particularly preferred from the viewpoints of contamination and the maintenance of pressure-sensitive adhesiveness.

<A-2. Pressure-sensitive adhesive layer>

The thickness of the pressure-sensitive adhesive layer is preferably 1 to 100 $\mu$m, more preferably 3 to 50 $\mu$m, still more preferably 5 to 30 $\mu$m.

The pressure-sensitive adhesive layer is constructed of a pressure-sensitive adhesive. The pressure-sensitive adhesives may be used alone or in combination.

The pressure-sensitive adhesive preferably contains a polymer P as a main component. The content of the polymer P in the pressure-sensitive adhesive is preferably 50 wt% or more, more preferably 80 wt% or more, still more preferably 90 wt% or more, particularly preferably 95 wt% or more.

The polymer P may be a cross-linked polymer.

Any appropriate pressure-sensitive adhesive can be adopted as the pressure-sensitive adhesive for constructing the pressure-sensitive adhesive layer. Examples of such pressure-sensitive adhesive include a silicone-based pressure-sensitive adhesive, a urethane-based pressure-sensitive adhesive, an acrylic pressure-sensitive adhesive, and a rubber-based pressure-sensitive adhesive. Of those, a silicone-based pressure-sensitive adhesive and a urethane-based pressure-sensitive adhesive are preferred as the pressure-sensitive adhesive because the effect of the present invention can be further expressed.

Any appropriate silicone-based pressure-sensitive adhesive can be adopted as the silicone-based pressure-sensitive adhesive. A product obtained by blending or agglomerating a silicone resin can be preferably adopted as such silicone-based pressure-sensitive adhesive.

Examples of the silicone-based pressure-sensitive adhesive include an addition reaction-curable silicone-based pressure-sensitive adhesive and a peroxide-curable silicone-based pressure-sensitive adhesive. Of those silicone-based pressure-sensitive adhesives, the addition reaction-curable silicone-based pressure-sensitive adhesive is preferred because a peroxide (such as benzoyl peroxide) is not used and no decomposition product is produced.

For example, when a polyalkylsilicone-based pressure-sensitive adhesive is obtained, a method involving curing a polyalkylhydrogensiloxane composition with a platinum catalyst is generally given as a curing reaction for the addition reaction-curable silicone-based pressure-sensitive adhesive.

Any appropriate urethane-based pressure-sensitive adhesive can be adopted as the urethane-based pressure-sensitive adhesive. As such urethane-based pressure-sensitive adhesive, there is preferably given one formed of a urethane resin obtained by a reaction of a polyol and a polyisocyanate compound. Examples of the polyol include a polyether polyol, a polyester polyol, a polycarbonate polyol, and a polycaprolactone polyol. Examples of the polyisocyanate compound include diphenylmethane diisocyanate, tolylene diisocyanate, and hexamethylene diisocyanate.

Any appropriate additive can be contained in the pressure-sensitive adhesive for constructing the pressure-sensitive adhesive layer. Examples of such additive include a softener, a tackifier, a surface lubricating agent, a leveling agent, an antioxidant, a corrosion inhibitor, a light stabilizer, a UV absorbing agent, a heat stabilizer, a polymerization inhibitor, a silane coupling agent, a lubricant, an inorganic or organic filler, metal powder, a pigment, and a solvent. However, in the present invention, the pressure-sensitive adhesive for constructing the pressure-sensitive adhesive layer is preferably free of any plasticizer. This is because the use of a pressure-sensitive adhesive layer to which a plasticizer has been added improves the wettability but may cause the contamination of the adherend by the plasticizer.

The pressure-sensitive adhesive for constructing the pressure-sensitive adhesive layer can be produced by any appropriate method. The pressure-sensitive adhesive for constructing the pressure-sensitive adhesive layer can be produced, for example, as described below. While a polymerization method to be generally employed as an approach to synthesizing a polymer, such as solution polymerization, emulsion polymerization, bulk polymerization, suspension polymerization, or polymerization with ultraviolet light (UV) is employed, any appropriate cross-linking method is adopted, and any appropriate additive is used as required.

The surface protective film of the present invention can be used in any appropriate application. The surface protective film of the present invention is preferably used for the surface of a display member, image recognition member, or electronic equipment.

A display member covered with the surface protective film of the present invention can be subjected to manual attachment and manual peeling any number of times.

An image recognition member covered with the surface protective film of the present invention can be subjected to manual attachment and manual peeling any number of times.

An electronic equipment covered with the surface protective film of the present invention can be subjected to manual attachment and manual peeling any number of times.

«B. Method of producing surface protective film»

The surface protective film of the present invention can be produced by any appropriate method. The production can be performed in conformity with, as such production method, any appropriate production method such as:

(1) a method involving applying a solution of the pressure-sensitive adhesive in a solvent or a hot-melt liquid thereof to the base material;
(2) a method involving transferring the pressure-sensitive adhesive layer applied and formed in a separator fashion in conformity with the foregoing;
(3) a method involving extruding a material for forming the pressure-sensitive adhesive layer onto the base material to form and apply the layer;
(4) a method involving extruding the base material and the pressure-sensitive adhesive layer in two layers or a plurality of layers;
(5) a method involving laminating a single layer of the pressure-sensitive adhesive layer onto the base material or a method involving laminating two layers of a laminate layer and the pressure-sensitive adhesive layer; or
(6) a method involving laminating two layers, or a plurality of layers, of the pressure-sensitive adhesive layer and a material for forming the base material such as a film or a laminate layer.

As a method for the application, there are given, for example, methods each involving the use of a bar coater, a gravure coater, a spin coater, a roll coater, a knife coater, or an applicator.

The method involving applying a solution of the pressure-sensitive adhesive in a solvent or a hot-melt liquid thereof to the base material is particularly preferred as the method of producing the surface protective film of the present invention in terms of productivity and a cost.

Examples

Hereinafter, the present invention is described specifically by way of examples. However, the present invention is by no means limited to these examples. It should be noted that test and evaluation methods in the examples and the like are as described below. In addition, the term "part(s)" means "part(s) by weight."

(Measurement of gel fraction)

The gel fraction (wt%) of the pressure-sensitive adhesive layer was determined as described below. A sample having a dry weight W1 (g) was collected from the pressure-sensitive adhesive layer. The sample was immersed in toluene, and the insoluble content of the sample was taken out of the toluene. The weight W2 (g) of the sample after drying was measured, and $(W2/W1) \times 100$ was calculated.

(Measurement of first wetting rate)

Test piece: 2.5 cm×8.0 cm

Adherend: An acrylic plate (manufactured by MITSUBISHI RAYON CO., LTD., trade name: ACRYLITE L)

Number of times of measurement:

3 (The average of 3 independently measured values was adopted.)

Measurement environment:

A class-10,000 clean room (having a temperature of 23°C and a humidity of 50%RH)

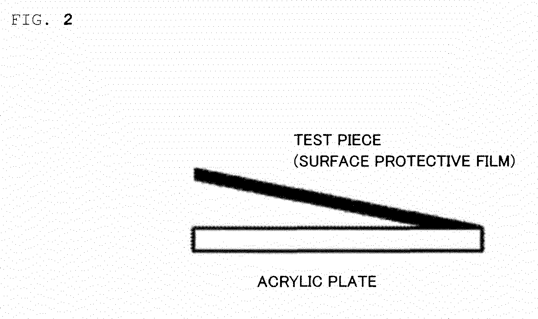

(1) FIG. 2 illustrates a state before the attachment of the acrylic plate and the test piece in the measurement of a first wetting rate. As illustrated in FIG. 2, an angle of 20 to 30° was formed in a state where part of the pressure-sensitive adhesive layer surface of the test piece (surface protective film) was brought into contact with the acrylic plate.

(2) Next, a hand was freed from the test piece so that the test piece was attached to the acrylic plate with its own weight alone. Simultaneously with the freeing of the hand, the manner in which the pressure-sensitive adhesive layer of the test piece was wet and spread over the acrylic plate was recorded with a digital camera at an interval of 0.2 second.

(3) The time point at which the pressure-sensitive adhesive layer surface except the site brought into contact with the acrylic plate in the section (1) started to be brought into contact with the acrylic plate was defined as an initial point. The manner in which the pressure-sensitive adhesive layer was wet and spread was analyzed with an image analysis software "ImageJ" every 0.2 second from the initial point.

(4) A wetting rate was calculated by using the following calculation equation.

$$\text{Wetting rate } (cm^2/sec) = (\text{wetted area 0.2 second after initial}$$

$$\text{point } (cm^2) - \text{wetted area at initial point } (cm^2))/0.2 \text{ (sec)}$$

(Measurement of third wetting rate)

The sample after the measurement of the first wetting rate was used. An end portion of the sample was lifted with fingers to form an angle of 20 to 30° in a state where part of the pressure-sensitive adhesive layer surface of the test piece (surface protective film) was brought into contact with the acrylic plate as illustrated in FIG. 2. Next, a hand was freed from the test piece so that the test piece was attached to the acrylic plate with its own weight alone. Simultaneously with the freeing of the hand, the manner in which the pressure-sensitive adhesive layer of the test piece was wet and spread over the acrylic plate was recorded with a digital camera at an interval of 0.2 second, and then a second wetting rate was measured in the same manner as in the first wetting rate. A third wetting rate was similarly measured by using the sample after the measurement of the second wetting rate.

(Measurement of adhesion)

A surface protective film was cut into a piece measuring 25 mm wide by 150 mm long and the piece was defined as a sample for an evaluation.
The pressure-sensitive adhesive layer surface of the sample for an evaluation was attached to an acrylic plate (manufactured by MITSUBISHI RAYON CO., LTD., trade name: ACRYLITE L) under an atmosphere having a temperature of 23°C and a humidity of 50%RH by reciprocating a 2-kg roller once. After having been guarded at 23°C for 30 minutes, the sample was measured for its adhesion with a universal tensile tester (manufactured by Minebea Co., Ltd., product name: TCM-1kNB) at a peel angle of 180° and a tension speed of 300 mm/min.

(Evaluation for wettability)

The same test piece as that in the method of measuring the first wetting rate was produced, the test piece was manually attached to the acrylic plate at a rate of 10 m/min, and the presence or absence of air bubbles between the test piece and the acrylic plate was confirmed.

○: No air bubbles are present.

Δ: Air bubbles are slightly involved but the air bubbles can be easily removed with fingers and the like, and no problems arise in practical use.

×: A large number of air bubbles are involved and the air bubbles cannot be easily removed.

(Evaluation for contamination resistance)

An acrylic plate (manufactured by MITSUBISHI RAYON CO., LTD., trade name: ACRYLITE L) after the measurement of its adhesion was visually observed under a three-band fluorescent lamp, and then the presence or absence of an adhesive residue or clouding was confirmed.

○: The adhesive residue and the clouding are absent.

×: The adhesive residue or the clouding is present.

(Evaluation for reworkability)

An evaluation for reworkability was performed on the basis of the following criteria.

○: The third wetting rate is 5.0 $cm^2$/sec or more, and the deformation of the film and the deformation of the pressure-sensitive adhesive layer surface are absent.

×: The third wetting rate is less than 5.0 $cm^2$/sec, the result of the evaluation for wettability is ×, and the deformation of the film and the deformation of the pressure-sensitive adhesive layer surface are present.

(Evaluation for deformation of film)

The shape of the surface protective film after the measurement of the adhesion was judged through visual observation under a fluorescent lamp.

The film was evaluated for its deformation on the basis of the following criteria.

○: The deformation is absent.

×: The deformation is present.

(Evaluation for deformation of pressure-sensitive adhesive layer surface)

The shape of the pressure-sensitive adhesive layer surface of the surface protective film after the measurement of the adhesion was judged through visual observation under a fluorescent lamp.

○: The deformation is absent.

×: The deformation is present.

(Evaluation for stop mark)

The entire pressure-sensitive adhesive layer surface of the surface protective film (having a width of 2.5 cm and a length of 10 cm) was attached to an acrylic plate with, for example, a hand roller. Next, the surface protective film was peeled off from the acrylic plate at a peel rate of 10 m/min and a peel angle of 180°. The peeling was stopped at a peeling distance of around 5 cm, and after several seconds, the peeling was restarted so that the entirety of the surface protective film was peeled off from the acrylic plate. The presence or absence of a stop mark at the portion where the peeling was stopped in the pressure-sensitive adhesive layer of the surface protective film was visually confirmed under a fluorescent lamp.

○: The stop mark is absent.

×: The stop mark is present.

(Measurement of water contact angle)

5. 0 Microliters of a water droplet were dropped on the surface of the pressure-sensitive adhesive layer and then a contact angle with respect to water immediately after the dropping was measured with an automatic contact angle-measuring apparatus (manufactured by EKO Instruments, OCA20). The average of three measured values (n=3) was adopted as a numerical value for the contact angle.

(Example 1)

100 Parts by weight of an "X-40-3229" (solid content: 60%, manufactured by Shin-Etsu Chemical Co., Ltd.) as a silicone-based pressure-sensitive adhesive, 0.5 part by weight of a "CAT-PL-50T" (manufactured by Shin-Etsu Chemical Co. , Ltd.) as a platinum catalyst, and 300 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (1).

Table 1 shows the results.

(Example 2)

90 Parts by weight of an "X-40-3229" (solid content: 60%, manufactured by Shin-Etsu Chemical Co., Ltd.) and 10 parts by weight of a "KR-3700" (solid content: 60%, manufactured by Shin-Etsu Chemical Co.,Ltd.) as a silicone-based pressure-sensitive adhesive, 0.5 part by weight of a "CAT-PL-50T" (manufactured by Shin-Etsu Chemical Co., Ltd.) as a platinum catalyst, and 300 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (2).

Table 1 shows the results.

(Example 3)

80 Parts by weight of an "X-40-3229" (solid content: 60%, manufactured by Shin-Etsu Chemical Co., Ltd.) and 20 parts by weight of a "KR-3700" (solid content: 60%, manufactured by Shin-Etsu Chemical Co.,Ltd.)as a silicone-based pressure-sensitive adhesive, 0.5 part by weight of a "CAT-PL-50T" (manufactured by Shin-Etsu Chemical Co., Ltd.) as a platinum catalyst, and 300 parts by weight of toluene as a solvent were compounded, and then the mixture was stirred with a disper to produce a silicone-based pressure-sensitive adhesive composition.

The resultant silicone-based pressure-sensitive adhesive composition was applied to a base material "Lumirror S10" (thickness: 38 μm, manufactured by Toray Industries, Inc.) formed of a polyester resin with a fountain roll so that its thickness after drying became 21 μm, followed by curing and drying under the conditions of a drying temperature of 150°C and a drying time of 1 minute.

Next, the silicone-treated surface of a base material formed of a polyester resin having a thickness of 25 μm one surface of which had been subjected to a fluorosilicone treatment was attached to the surface of the pressure-sensitive adhesive layer to produce a surface protective film (3).

Table 1 shows the results.

(Example 4)

100 Parts by weight of a "PREMINOL 7012" (solid content: 100%, manufactured by ASAHI GLASS Co., Ltd.) as a urethane-based pressure-sensitive adhesive, 13.2 parts by weight of a "Coronate L" (solid content: 75%, manufactured by Nippon Polyurethane Industry Co. , Ltd.) as a cross-linking agent, 0.015 part by weight of dibutyltin dilaurate (1-wt% ethyl acetate solution) as a cross-linking catalyst, and 110 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness : 38 μm, manufactured by Toray Industries, Inc.) formed of a polyester resin with a fountain roll so that its thickness after drying became 21 μm, followed by curing and drying under the conditions of a drying temperature of 130°C and a drying time of 1 minute.

Next, the silicone-treated surface of a base material formed of a polyester resin having a thickness of 25 $\mu$m one surface of which had been subjected to a fluorosilicone treatment was attached to the surface of the pressure-sensitive adhesive layer, and the resultant was aged at an aging temperature of 50°C for 2 days to produce a surface protective film (4).

Table 1 shows the results.

(Example 5)

100 Parts by weight of a "US-902" (solid content: 60%, manufactured by Ipposha Oil Industries Co. , Ltd.) as a urethane-based pressure-sensitive adhesive, 9. 6 parts by weight of a "Cross-linking agent N" (manufactured by Ipposha Oil Industries Co., Ltd.) as a cross-linking agent, and 300 parts by weight of toluene as a solvent were compounded, and then the mixture was stirred with a disper to produce a urethane-based pressure-sensitive adhesive composition.

The resultant urethane-based pressure-sensitive adhesive composition was applied to a base material "Lumirror S10" (thickness: 38 $\mu$m, manufactured by Toray Industries, Inc.) formed of a polyester resin with a fountain roll so that its thickness after drying became 21 $\mu$m, followed by curing and drying under the conditions of a drying temperature of 100°C and a drying time of 2 minutes.

Next, the silicone-treated surface of a base material formed of a polyester resin having a thickness of 25 $\mu$m one surface of which had been subjected to a fluorosilicone treatment was attached to the surface of the pressure-sensitive adhesive layer, and the resultant was aged at an aging temperature of 40°C for 4 days to produce a surface protective film (5).

Table 1 shows the results.

(Comparative Example 1)

40 Parts by weight of an "X-40-3229" (solid content: 60%, manufactured by Shin-Etsu Chemical Co., Ltd.) and 60 parts by weight of a "KR-3700" (solid content: 60%, manufactured by Shin-Etsu Chemical Co.,Ltd.) as a silicone-based pressure-sensitive adhesive, 0.5 part by weight of a "CAT-PL-50T" (manufactured by Shin-Etsu Chemical Co., Ltd.) as a platinum catalyst, and 300 parts by weight of toluene as a solvent were compounded, and then the mixture was stirred with a disper to produce asilicone-based pressure-sensitive adhesive composition.

The resultant silicone-based pressure-sensitive adhesive composition was applied to a base material "Lumirror S10" (thickness: 38 $\mu$m, manufactured by Toray Industries, Inc.) formed of a polyester resin with a fountain roll so that its thickness after drying became 21 $\mu$m, followed by curing and drying under the conditions of a drying temperature of 150°C and a drying time of 1 minute.

Next, the silicone-treated surface of a base material formed of a polyester resin having a thickness of 25 $\mu$m one surface of which had been subjected to a fluorosilicone treatment was attached to the surface of the pressure-sensitive adhesive layer to produce a surface protective film (C1).

Table 1 shows the results.

(Comparative Example 2)

A mixture of 200 g of 2-ethylhexyl acrylate, 8 g of 2-hydroxyethyl acrylate, 0.4 g of 2,2'-azobisisobutyronitrile, and 312 g of ethyl acetate was subjected to a reaction in a stream of nitrogen at 65°C for 6 hours to provide a solution (40 wt%) of an acrylic polymer having a Tg of -68°C and a weight-average molecular weight of 500,000. The resultant solution (40 wt%) of the acrylic polymer A was diluted to 20 wt% with ethyl acetate, and then 0.8 g of an isocyanurate body of hexamethylene diisocyanate (manufactured by Nippon Polyurethane Industry Co., Ltd., Coronate HX) and 0.4 g of dibutyltin dilaurate (1-wt % ethyl acetate solution) as a cross-linking catalyst were added to 100 g of the solution to prepare an acrylic pressure-sensitive adhesive solution. 100 g of the acrylic pressure-sensitive adhesive solution were compounded with 50 g of bis(2-ethylhexyl) phthalate (manufactured by J-PLUS Co., Ltd.) as a plasticizer to prepare a plasticizer-containing acrylic pressure-sensitive adhesive composition.

The resultant acrylic pressure-sensitive adhesive composition was applied to a base material "Lumirror S10" (thickness: 38 $\mu$m, manufactured by Toray Industries, Inc.) formed of a polyester resin with a fountain roll so that its thickness after drying became 21 $\mu$m, followed by curing and drying under the conditions of a drying temperature of 110°C and a drying time of 3 minutes

Next, the silicone-treated surface of a base material formed of a polyester resin having a thickness of 25 $\mu$m one surface of which had been subjected to a fluoro silicone treatment was attached to the surface of the pressure-sensitive adhesive layer to produce a surface protective film (C2)

Table 1 shows the results

[0076] [Table 1]

| Sample | Example 1 | Example 2 | Example 3 | Example 4 | Example 5 | Comparative Example 1 | comparative example 2 |
|---|---|---|---|---|---|---|---|
| Gel fraction [%] | 88.7 | 83.5 | 79.3 | 94.8 | 97.0 | 57.4 | 48.0 |
| First wetting rate [cm2/sec] | 37.0 | 21.0 | 6.9 | 9.5 | 5.5 | 2.6 | 10.1 |
| Third wetting rate [cm2/sec] | 42.0 | 21.0 | 6.8 | 8.0 | 5.2 | 2.8 | -*1 |
| Wettability | ○ | ○ | ○ | ○ | Δ | × | ○ |
| Contamination resistance | ○ | ○ | ○ | ○ | ○ | ○ | × |
| Adhesion [N/2.5mn] | 0.04 | 0.08 | 0.09 | 0.14 | 0.04 | 0.80 | -*2 |
| Reworkability | ○ | ○ | ○ | ○ | ○ | × | × |
| Deformation of film | ○ | ○ | ○ | ○ | ○ | × | × |
| Deformation of pressure-sensitive adhesive layer surface | ○ | ○ | ○ | ○ | ○ | ○ | × |
| Contact angle [°] | 112.5 | 116.9 | 117. 0 | 87.2 | 90.2 | 112.4 | 93.8 |
| Stop mark | ○ | ○ | ○ | ○ | ○ | × | × |
| *1 The measurement could not be performed owing to the deformation of the pressure-sensitive adhesive layer surface. *2 The measurement could not be performed owing to the cohesive failure of the pressure-sensitive adhesive. | | | | | | | |

Industrial Applicability

The surface protective film of the present invention is suitably used in, for example, an application where a surface of a display member, image recognition member, or electronic equipment is protected by attaching the film to the surface.

Reference Signs List

**1** base material layer
**2** pressure-sensitive adhesive layer
**10** surface protective film

**Claims**

**1.** A surface protective film, comprising:

a base material layer; and
a pressure-sensitive adhesive layer,

wherein:

a gel fraction of the pressure-sensitive adhesive layer is 70% or more; and
a first wetting rate with respect to an acrylic plate in a surface of the pressure-sensitive adhesive layer, which is brought into contact with an adherend, is 5.0 cm$^2$/sec or more.

2.  A surface protective film according to claim 1, wherein an adhesion with respect to the acrylic plate in the surface of the pressure-sensitive adhesive layer, which is brought into contact with the adherend, is 0.02 to 0.5 N/25 mm.

3.  A surface protective film according to claim 1 or 2, wherein the surface protective film is used for a surface of a display member, an image recognition member, or an electronic equipment.

4.  A display member, which is covered with the surface protective film according to claim 1 or 2.

5.  An image recognition member, which is covered with the surface protective film according to claim 1 or 2.

6.  An electronic equipment, which is covered with the surface protective film according to claim 1 or 2.

FIG. **1**

FIG. 2

TEST PIECE
(SURFACE PROTECTIVE FILM)

ACRYLIC PLATE

| INTERNATIONAL SEARCH REPORT | International application No. |
|---|---|
| | PCT/JP2012/059531 |

A. CLASSIFICATION OF SUBJECT MATTER
*C09J7/02*(2006.01)i, *C09J201/00*(2006.01)i, *C09J175/08*(2006.01)n,
*C09J183/00*(2006.01)n

According to International Patent Classification (IPC) or to both national classification and IPC

B. FIELDS SEARCHED

Minimum documentation searched (classification system followed by classification symbols)
C09J1/00-201/10

Documentation searched other than minimum documentation to the extent that such documents are included in the fields searched
Jitsuyo Shinan Koho        1922-1996    Jitsuyo Shinan Toroku Koho    1996-2012
Kokai Jitsuyo Shinan Koho   1971-2012    Toroku Jitsuyo Shinan Koho    1994-2012

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Silicone Pressure Sensitive Adhesives [online]. Shin-Etsu Chemical Co., Ltd., 2010.07. [retrieved on 2012-07-02]. Retrieved from the Internet: <http://www.silicone.jp/e/catalog/pdf/PSA_E.pdf> | 1-6 |
| X | JP 2006-182795 A (Mitsubishi Chemical Corp.), 13 July 2006 (13.07.2006), claims; paragraphs [0053] to [0078] (Family: none) | 1-6 |
| A | JP 2009-179788 A (Dainippon Printing Co., Ltd.), 13 August 2009 (13.08.2009), claims; paragraphs [0019], [0032], [0052] to [0055] (Family: none) | 1-6 |

[X] Further documents are listed in the continuation of Box C.        [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 July, 2012 (05.07.12) | 17 July, 2012 (17.07.12) |

| Name and mailing address of the ISA/ | Authorized officer |
|---|---|
| Japanese Patent Office | |
| Facsimile No. | Telephone No. |

| | INTERNATIONAL SEARCH REPORT | International application No. |
|---|---|---|
| | | PCT/JP2012/059531 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2007-231145 A　(Achilles Corp.),<br>13 September 2007 (13.09.2007),<br>claims; paragraphs [0009], [0044], [0063] to<br>[0065]<br>(Family: none) | 1-6 |
| A | JP 2005-290122 A　(Toyo Polymer Co., Ltd.),<br>20 October 2005 (20.10.2005),<br>claims; paragraphs [0037] to [0058]<br>(Family: none) | 1-6 |

| INTERNATIONAL SEARCH REPORT | International application No. |
| --- | --- |
| | PCT/JP2012/059531 |

The surface protective film of claim 1 includes every surface protective film that has such a desired characteristic that "the adhesive layer thereof has a gel fraction of 70% or more and a first wetting speed of 5.0 $cm^2$/sec or more with respect to an acrylic board"; and the surface protective film of claim 2 includes every surface protective film that has such a desired characteristic that "the adhesive layer thereof has an adhesive force of 0.02-0.5 N/25 mm with respect to an acrylic board".

Meanwhile, only surface protective films which are provided with adhesive layers that are composed of specific adhesives set forth in the description are disclosed within the meaning of PCT Article 5. Consequently, claims 1 and 2 are not fully supported within the meaning of PCT Article 6.

This international search report therefore covers the cases where the adhesive layers are formed of addition-curable silicone adhesives that are explained to be preferable in paragraph [0045] of the description and have corresponding examples set forth in the description and the cases where the adhesive layers are formed of urethane resins obtained by reacting polyols with polyisocyanate compounds, said urethane resins being explained to be preferable in paragraph [0047] of the description and having corresponding examples set forth in the description.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010209324 A